Europäisches Patentamt

European Patent Office

Office européen des brevets

(11) Publication number: **0 286 174**
**A1**

## (12) EUROPEAN PATENT APPLICATION

(21) Application number: **88200620.8**

(22) Date of filing: **05.04.88**

(51) Int. Cl.⁴ **A01G 1/04**

(30) Priority: **06.04.87 NL 8700796**

(43) Date of publication of application:
**12.10.88 Bulletin 88/41**

(84) Designated Contracting States:
**AT BE CH DE ES FR GB GR IT LI LU NL SE**

(71) Applicant: **AGRI SYSTEMS B.V.**
**De Brauwweg 30**
**NL-3125 AE Schiedam(NL)**

(72) Inventor: **Leendertse, Krijn Dingenus Karel**
**Duinlaan 143**
**NL-2554 ET 's-Gravenhage(NL)**

(74) Representative: **Noz, Franciscus Xaverius, Ir.**
**et al**
**Algemeen Octrooibureau P.O. Box 645**
**NL-5600 AP Eindhoven(NL)**

(54) **Method and device for removing a layer of cultivation material from a treatment room.**

㊼ The invention relates to a method and device for discharging cultivation material from a treatment room. Said cultivation material is supported in the treatment room by supporting means movable in the longitudinal direction of the treatment room. In discharging cultivation material from the treatment room said supporting means are moved over an elevation arranged near an end of said treatment room.

FIG.1.

## Method and device for removing a layer of cultivation material from a treatment room.

The invention relates to a method for removing a layer of cultivation material from a treatment room, whereby the cultivation material is transported to a discharge end of the treatment room by a supporting means supporting the cultivation material.

For preparing cultivation material, e.g. for raising mushrooms, it is usual to put the cultivation material in a treatment room which is provided with a perforated floor, on which floor there is laid a supporting means, usually formed by a pervious cloth. Via the pervious floor it will be possible to lead e.g. hot air through the layer of cultivation material present on the floor during a desired length of time. The thickness of said layer may be as much as two metres.

After the layer of cultivation material has been subjected to the desired treatments in the treatment room during the desired time the layer of cultivation material is removed from the treatment room by discharging the supporting means in the longitudinal direction of the treatment room towards a discharge end of the treatment room. Near said discharge end there is usually arranged a transporting device, by means of which the cultivation material coming from the treatment room can discharged e.g. into vehicles intended for the transport of the cultivation material.

A problem that occurs hereby is that the treated cultivation material is strongly cohesive, so that the cultivation material, when being moved, tends to remain adhered to the cultivation material still present on the supporting means when said cultivation material becomes disengaged from the supporting means near the end of said supporting means, so that only after the layer of cultivation material projects beyond the end of the supporting means at a comparatively large distance said material projecting from the supporting means breaks off from the layer of cultivation material still resting on the supporting means.

It will be apparent that as a result a high load is placed on the parts of the device which must further process the cultivation material and on which a large quantity of cultivation material falls so suddenly, which may lead to serious damage to the device in question.

Consequently the purpose of the invention is to obtain a method of the above kind, whereby said disadvantage can be avoided.

According to the invention this can be achieved in that near its end the supporting means is lead across an elevation extending transversely to the direction of movement of the supporting means.

By using the method according to the invention the layer of cultivation material will tend to split from top towards bottom, parallel to the elevation, when passing the elevation, as a result of which a loosening of the material is effected in the layer of cultivation material at the elevation and thus, at the end of the supporting means, the cultivation material will fall continually and gradually off the end of the supporting means during operation.

According to a further aspect of the invention such a method can be carried out effectively by means of a device for discharging cultivation material from a treatment room provided with a drum for winding up a flexible supporting means supporting the cultivation material in the treatment room and with transport means for discharging material supplied to the device by means of the supporting means, whereby according to the invention the device is provided with a guide means for the supporting means located in front of the supporting means, seen in the direction of movement of the supporting means during operation, the upper side of said guide means being located higher than the drum.

The invention will be further explained hereinafter with reference to a device according to the invention diagrammatically illustrated in the accompanying figures.

Fig. 1 is a side view of a device according to the invention.

Fig. 2 is a side view of fig. 1.

Fig. 3 is a further possible embodiment of a construction for carrying out the method according to the invention.

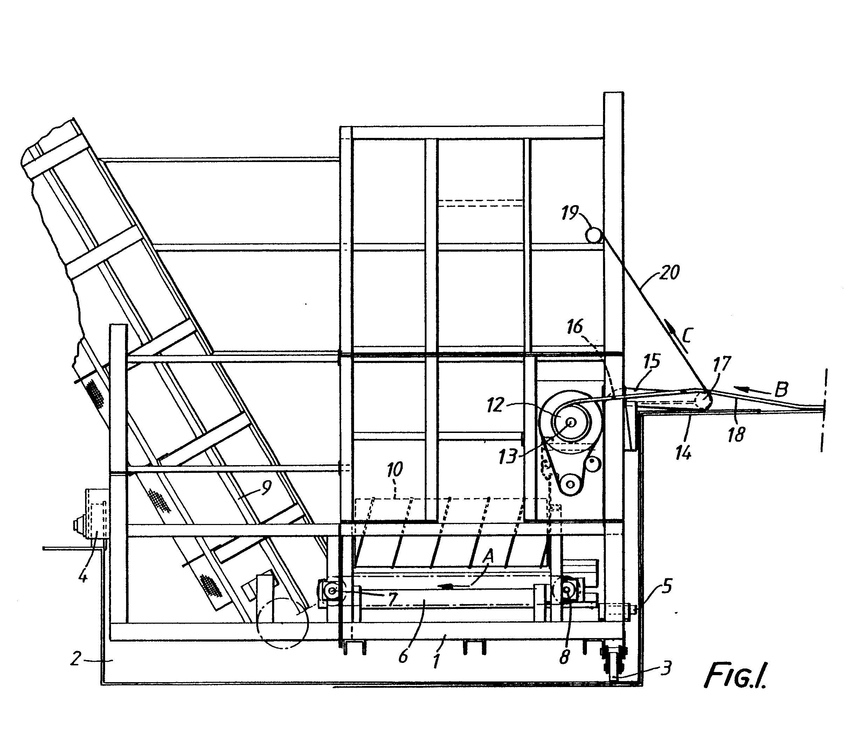

The device illustrated in the figures comprises a frame 1, which is mobile perpendicular to the plane of drawing, seen in fig 1, in a passage 2 recessed in the bottom surface. For this purpose the device is supported by a number of wheels 3 and 4, which are located at different levels, as appears from fig 1. At least one of the wheels 4 is drivable thereby.

Furthermore the device is provided with a endless conveyor belt 6, which is led about a pair of axes 7 and 8 extending perpendicularly to the axes of rotation of the wheels 3 and 4. Seen in fig 1 the left-hand end of the conveyor 6 is located near the bottom end of an upwardly extending endless conveyor 9 only diagrammatically illustrated in fig 1. Screw jacks 10 and 11, extending parallel to the longitudinal direction of the conveyor 6, are furthermore provided near the sides of the endless conveyor.

The conveyor 6 can be driven such that the upper part of the conveyor can discharge material present thereon in the direction of arrow A toward the lower end of the conveyor 9. The displacement of material present on the conveyor 6 in the direction of the lower end of the conveyor 9 is thereby supported by means of the screw jacks 10 and 11 set rotating during operation. The material supplied to the lower end of the conveyor 9 can be transported upwards by means of the conveyor 9, in order to be discharged, e.g. at the upper end of the conveyor 9, into a vehicle or the like.

At some distance above the end of the conveyor 6 remote from the conveyor 9 there is arranged a drum 12, which is drivable about a horizontal axis 13, which extends parallel to the axes 7 and 8 of the endless conveyor 6. As will be apparent from fig 1 said drum 12 is arranged such that the uppermost point of the drum is substantially at the same level as a floor plate 14, which forms the extension of a floor of a treatment room, not shown, in which cultivation material, e.g. to be used for raising mushrooms or the like, is pre-treated, as explained above.

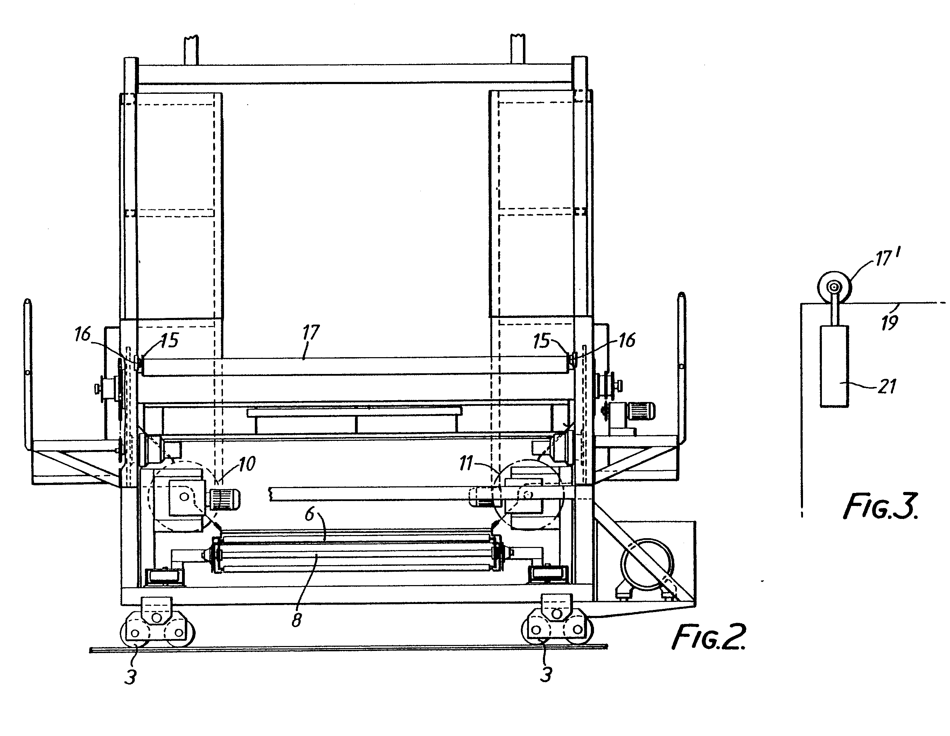

Near the drum a pair of arms 15 are fitted to the frame, said arms being pivotable relatively to the frame about axes 16 extending parallel to the axis 13. In the illustrated embodiment the arms are formed by vertical plate-shaped parts. Between the ends of the arms 15 remote from the axes 16 there is provided a guide means formed by a round pipe 17 in the illustrated embodiment, said guide means extending across the entire width of the device, seen in fig. 2. In the operating position illustrated in figs 1 and 2 the guide means 17 is thereby located above the floor part 14, at some distance from the drum 12.

In order to discharge the cultivation material present in the treatment room, not shown, the end of a supporting means resting on the floor of the treatment room and usually being formed by a cloth 18 pervious to air, is fixed with its free end to the drum 12. Then the drum 12 is set rotating in order to move the cloth in the direction according to arrow B while simultaneously winding up the cloth on the drum. By thus moving the cloth 18 in the direction according to arrow B the material present in the treatment room will be moved gradually in the direction of the device illustrated in the figs 1 and 2. This material, which exits from the treatment room, generally forms a compact, strongly cohesive layer. At the guide means formed by the pipe 17 said layer will first be moved upwards and move downwards again in the direction of the drum 12 after having passed said guide means. This results in the formation of cracks in the layer of material near the guide means, parallel to the longitudinal direction of said guide means.

As a result a large number of cracks, extending transversely to the direction of movement of the layer of material, are formed in the layer of material on passing the elevation formed by the guide means. Consequently it will be possible for the material to fall downwards on the conveyor 6 in a regular stream near the drum 12, where the flexible supporting means 18 is wound on the drum 12, so that when the layer of cultivation material is moved by means of the flexible supporting means 18 a continuous, regular discharge of the material from the end of the cloth 18 located near the drum 12 is effected, so that no shock loading of the conveyor 6 and the like will occur.

After the treatment room has been emptied completely the cloth 18 may again be pulled off the drum 12 in a direction opposed to arrow B and be put on the floor of the treatment room in the usual manner, in order to support a next layer of cultivation material to be treated therein.

The figures illustrate a mobile device. The device is constructed mobile because in practice it is usual that a number of treatment rooms are located side by side and thus the device can always be moved in front of the end of that treatment room which needs to be emptied in the manner described above. For moving the device the arms 15 supporting the guide means 17 can be pivoted upwards in the direction according to arrow C, to a position in which the arms with the guide means are located at least substantially within the confinement of the frame 1 and thus do not form an impeding projection when the device is being moved. This may be done by hand, for which purpose a suitable handle, not shown, may be fixed to the guide means. This can be done efficiently, however, by means of mechanical means, e.g. as is diagrammatically illustrated in fig 1, by using a drivable drum 19 journalled in the frame, on which drum cables 20 can be wound and unwound, whilst the free ends of said cables 20 are connected to the ends of the arms 15 remote from the axes 16.

When such mechanical auxiliary means are being used it will also be possible, dependent on the operating conditions, to adjust the guide means 17 to a desired height, such that the elevation formed by the guide means 17, along which the flexible supporting means 18 is deflected is located more or less high and as a result a more or less strong breaking action is effected.

A further possibility for carrying out the method according to the invention is illustrated in fig 3.

As is diagrammatically illustrated here a guide means 17', extending across the width of a treatment room, may be provided near the end of the floor part 14, which guide means corresponds with the guide means 17 described above. Said guide means 17' is supported near its two ends by a pair of vertically arranged setting cylinders 21, by means of which the guide means 17', across which the cloth 18 will be moved when the treatment room is emptied of the cultivation material, can be adjusted to a desired height. It will be apparent, that the same effect can be reached hereby as with the construction described above.

Although it will be preferable thereby to use a guide means 17' which is adjustable in vertical direction it will also be possible, however, to use a guide means 17 having a fixed arrangement when it can be expected that in general the operating conditions, in particular the nature of the material to be treated, will constantly remain the same.

## Claims

1. Method for removing a layer of cultivation material from a treatment room, whereby the cultivation material is transported to a discharge end of the treatment room by a supporting means supporting the cultivation material, characterized in that near the discharge end the supporting means is led across an elevation extending transversely to the direction of movement of the supporting device.

2. Device for discharging cultivation material from a treatment room provided with a drum for winding a flexible supporting means supporting the cultivation material in the treatment room, and with conveying means for discharging cultivation material supplied to the device by means of the supporting means, characterized in that, seen in the direction of movement of the supporting means during operation, the device is provided with a guide means for the supporting means, which guide means is located in front of the drum and whose upper side is located higher than the drum.

3. Device according to claim 1, characterized in that the guide means is adjustable in vertical direction.

4. Device according to claims 2 or 3, characterized in that the guide means is fixed to a pair of arms pivotally connected to the frame of the device.

5. Device according to any one of the claims 2 - 4, characterized in that the guide means is adjustable relatively to the frame, to a position in which the guide means is located at least substantially within the confinement of the frame.

6. Treatment room for cultivation material provided with a floor pervious to air and with a supporting means for the cultivation material, said supporting means for cultivation material being located on the floor and being movable, relatively to the floor, to a discharge end, characterized in that near the discharge end there is provided a guide means for the supporting means which projects from the floor.

Fig.1.

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | NL-A-8 003 088 (JOLUBA) <br> * Claims 1,14; figure 3 * | 1,2,6 | A 01 G 1/04 |
| Y | GB-A-2 076 352 (LUKE) <br> * Figure 1; page 1, lines 85-95 * | 1,2,6 | |
| A | NL-A-8 105 823 (VECIAP HOLLAND) <br> * Figure 9; page 8, lines 27-36 * | 1,6 | |
| A,P | DE-C-3 615 769 (MOHR) <br> * Figure 1; column 3, lines 3-35 * | 1-4,6 | |
| Y | US-A-4 273 495 (PANNELL) <br> * Figure 1; column 9, lines 3-11; claim 1 * | 1,2,6 | |
| Y | DE-B-1 112 010 (EISENWERK WESERHÜTTE) <br> * Figure 1; column 2, lines 33-35 * | 1,2,6 | |

TECHNICAL FIELDS SEARCHED (Int. Cl.4)

A 01 G
B 65 G

The present search report has been drawn up for all claims

| Place of search | Date of completion of the search | Examiner |
|---|---|---|
| THE HAGUE | 30-06-1988 | MEINDERS H. |